# EUROPÄISCHE PATENTSCHRIFT

(11) **EP 3 068 663 B1**
(45) Veröffentlichungstag und Bekanntmachung des Hinweises auf die Patenterteilung: **26.05.2021**
(21) Anmeldenummer: 14796510.7
(22) Anmeldetag: 12.11.2014
(51) Int. Cl.: B60N 2/68, B60N 2/22

(54) **LEHNENVERSTELLER FÜR EINEN FAHRZEUGSITZ UND FAHRZEUGSITZ**
BACKREST ADJUSTER FOR A VEHICLE SEAT AND VEHICLE SEAT
RÉGLAGE DE DOSSIER POUR UN SIÈGE DE VÉHICULE ET SIÈGE DE VÉHICULE

(30) Priorität: 12.11.2013 DE 102013223026
(43) Veröffentlichungstag der Anmeldung: 21.09.2016
(73) Patentinhaber: Adient Luxembourg Holding S.à r.l., 1855 Luxembourg (LU)
(72) Erfinder: WAHLEN, Hilmar, 42499 Hückeswagen (DE); KLEIN-HITPASS, Thorsten, 50668 Köln (DE); GENUTT, Ulli, 53804 Much (DE); MÜHLENBROCK, Ludger, 45665 Recklinghausen (DE)
(74) Vertreter: Finger, Catrin
(86) Internationale Anmeldenummer: PCT/EP2014/074363
(87) Internationale Veröffentlichungsnummer: WO 2015/071301

(56) Entgegenhaltungen:
- DE-A1-102010 062 122
- FR-A1- 2 990 166
- US-A- 3 501 198

## Beschreibung

Die Erfindung betrifft einen Lehnenversteller für einen Fahrzeugsitz zur Neigungsverstellung einer Sitzlehne des Fahrzeugsitzes. Darüber hinaus betrifft die Erfindung einen Fahrzeugsitz mit einem solchen Lehnenversteller.

Aus dem Stand der Technik sind Fahrzeugsitze bekannt, deren Sitzlehnen in ihrer Neigung um eine Schwenkachse verstellbar und auch nach vorne klappbar sind. Üblicherweise weist ein solcher Fahrzeugsitz einen Lehnenversteller mit einer Übertragungswelle auf, welche einerseits mit einem Gelenkbeschlag und andererseits mit einem Drehlager oder einem weiteren Gelenkbeschlag gekoppelt ist. Der zumindest eine Gelenkbeschlag umfasst ein unteres, sitzgestellfestes Beschlagteil und ein oberes, lehnenfestes Beschlagteil, welche zur Neigungsverstellung der Rückenlehne relativ zueinander verstellbar sind.

Aus US 5,090,264 A ist ein Bewegungsmechanismus bekannt, bei dem zwei Teile gelenkig mittels einer Stange miteinander verbunden werden. Der Mechanismus ist für schwenkbare Sitzelementen, insbesondere für Kraftfahrzeugsitze, vorgesehen.

Ferner ist in DE 43 14 119 A1 ein Kraftfahrzeugsitz mit neigungsverstellbarer Lehne beschrieben. Hierbei ist in der Verbindung zweier Antriebelemente eine Verspannkupplung eingebaut, mit der ein unerwünschtes selbständiges Verstellen der Lehnenneigung verhindert werden soll.

Die US 3,501,198 A beschreibt eine Vorrichtung zur Verstellung der Rückenlehne eines Fahrzeugsitzes für ein Straßenfahrzeug. Die Anordnung weist einen Querträger auf, an dem eine Rückenlehnenkonstruktion befestigt ist und der schwenkbar mit einer Basisstruktur verbunden ist. Damit wird ein Gelenkelement gebildet, das eine Winkelverstellung und die Verriegelung der Rückenlehne ermöglicht. Einem Ende gegenüber befinden sich am Querträge zwei Zahnriemenverriegelungsglieder, von denen eines mit der Rückenlehne und das andere mit der Basisstruktur gekoppelt ist, sowie eine Betätigungseinrichtung, die beim Betätigten, eine Verriegelung löst. Die Anordnung ist so ausgebildet, dass in einer Position Zähne der beiden Verriegelungsglieder miteinander in Eingriff stehen, um eine Schwenkbewegung des Querträgers gegenüber der Basisstruktur zu verhindern, während in einer anderen Position der Einrichtung die Zähne der beiden Verriegelungsglieder voneinander getrennt sind, um die Schwenkbewegung zu ermöglichen.

In FR 2 990 166 A1 ist ein Fahrzeugsitz mit einer verstellbaren Rückenlehne angegeben. Seitlich an der Rückenlehne sind Flansche befestigt, die Löcher aufweisen, in denen ein hohles Querrohr drehbar gelagert ist. An einem der Flansche ist ein Ende einer gebogenen Stange befestigt, deren anderes Ende in das Querrohr ragt und in diesem an einem verformten Bereich befestigt ist. Das Hohlrohr ist mit der Sitzfläche verbunden.

Die DE 10 2010 062 122 A1 beschreibt einen Fahrersitz mit einem Sitzrahmen und einer in einem Querrohr angeordneten Drehstabfeder, die sich zumindest teilweise im Querrohr erstreckt. Ferner ist ein Halteelement vorgesehen, das an das Querrohr angesetzt ist und das erste Ende der Drehstabfeder hält.

Aufgabe der vorliegenden Erfindung ist es, einen gegenüber dem Stand der Technik verbesserten Lehnenversteller für einen Sitz, insbesondere einen Fahrzeugsitz anzugeben.

Die Aufgabe wird erfindungsgemäß mit einem Lehnenversteller, der die im Anspruch 1 angegebenen Merkmale und mit einem Sitz, der die im Anspruch 4 angegebenen Merkmale aufweist, gelöst.

Vorteilhafte Ausgestaltungen sind Gegenstand der Unteransprüche.

Der Lehnenversteller weist einen Beschlag und ein diesem gegenüberliegend angeordnetes Drehlager und ein diese miteinander verbindendes Übertragungselement auf, wobei ein Verspannelement vorgesehen ist, das drehlagerseitig, d.h. im Bereich des Drehlagers, und beschlagsseitig, d. h. im Bereich des gegenüberliegenden Beschlags, fixiert ist. Dabei ist das Verspannelement im Bereich zwischen dem Drehlager und dem Beschlag vom Übertragungselement umgeben.

Das Drehlager weist auf einer dem einen Beschlag gegenüberliegenden Seite des Fahrzeugsitzes im zugehörigen Beschlagunterteil eine Aufnahme zur Befestigung des Übertragungselements auf.

Das Verspannelement ist einstückig und im Wesentlichen L-förmig ausgebildet, wobei ein erster Schenkel von außen in das Übertragungselement bis zu einer inneren Fixierung hineinragt und ein zweiter Schenkel am Drehlager abgestützt ist, wobei das Übertragungselement am beschlagseitigen Ende eine Aufnahme zur formschlüssigen Fixierung des umgebogenen Endes des ersten Schenkels des Verspannelements aufweist.

Die Integration sowohl des die Schwenkfunktion ausführenden Übertragungselements und des Verspannelements in den Bereich der Schwenkachse des Lehnenverstellers ermöglicht eine besonders einfache und kostengünstige Lösung für einen Lehnenversteller. Darüber hinaus wird mittels des den einen Beschlag und das gegenüberliegende Drehlager verbindenden Übertragungselements, welches als Rohr ausgebildet ist, eine auf den einseitigen Beschlag wirkende Last direkt in den Unterbau abgeleitet und somit der einseitige Beschlag nicht überlastet.

Eine vorteilhafte Ausführung sieht vor, dass auf den Außenseiten des Lehnenverstellers jeweils ein Beschlagoberteil und ein Beschlagunterteil angeordnet ist, wobei das Beschlagoberteil mit der Sitzlehne fest verbindbar ist und das Beschlagunterteil mittels einer bodenseitigen Sitzteilstruktur am Fahrzeugboden befestigbar ist.

Ausführungsbeispiele der Erfindung werden nachfolgend anhand der beigefügten schematischen Figuren näher beschrieben. Dabei zeigen:
- Fig. 1: schematisch in perspektivischer Ansicht schräg von vorne einen Lehnenversteller mit einem Übertragungselement, das im Bereich einer Schwenkachse einer Sitzlehne eines Sitzes außen beidseitig fixiert ist, und einem Verspannelement, das zumindest bereichsweise vom Übertragungselement umhüllt ist,
- Fig. 2: schematisch den Lehnenversteller gemäß Figur 1 in einer anderen perspektivischen Ansicht schräg von vorne,
- Fig.3: schematisch ein erfindungsgemäßes Verspannelement,
- Fig. 4: eine perspektivische Darstellung eines Abschnitts einer Sitzstruktur mit einem als Torsionsfeder ausgebildeten Verspannelement, welches in einem Übertragungselement angeordnet ist
und
- Fig. 5: eine perspektivische Darstellung eines Abschnitts einer Sitzstruktur mit einem als Torsionsfeder ausgebildeten Verspannelement.

Einander entsprechende Teile sind in allen Figuren mit den gleichen Bezugszeichen versehen.

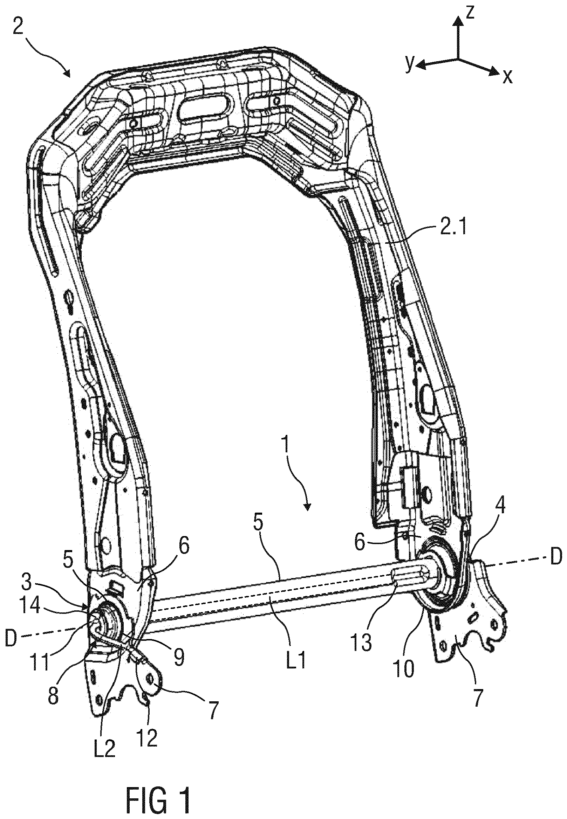

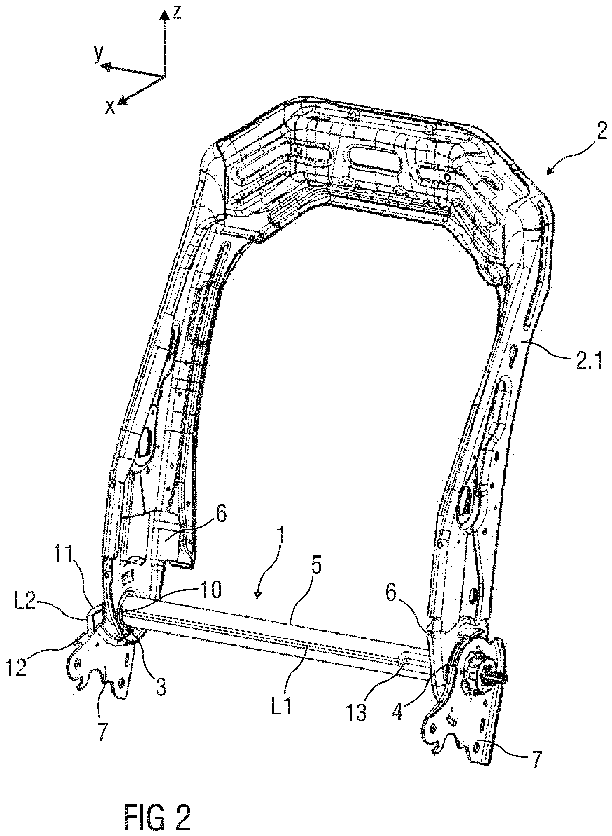

Die Figuren 1 und 2 zeigen in unterschiedlichen perspektivischen Ansichten schräg von vorn einen Lehnenversteller 1 für einen Sitz 2, insbesondere einen Fahrzeugsitz. Der Sitz 2 weist zumindest eine Sitzlehne 2.1 und ein nicht näher dargestelltes Sitzteil auf. Die Sitzlehne 2.1 ist schwenkbar an dem Sitzteil mittels des Lehnenverstellers 1 angeordnet.

Der Lehnenversteller 1 umfasst auf einer der Außenseiten, im Ausführungsbeispiel von vorn auf der linken Außenseite, für eine Neigungseinstellung und ein Freischwenken der Sitzlehne 2.1 relativ zum Sitzteil ein Drehlager 3 und auf der gegenüberliegenden Seite einen Beschlag 4. Der Beschlag 4 und das gegenüberliegende Drehlager 3 sind mittels eines als Rohr ausgebildeten Übertragungselements 5 miteinander verbunden.

Das Übertragungselement 5 verläuft durch eine Dreh- oder Schwenkachse D der schwenkbaren Sitzlehne 2.1. Das Übertragungselement 5 ist als Hohlrohr ausgebildet und koppelt den Beschlag 4 und das Drehlager 3 entlang der Drehachse D.

Beidseitig des Sitzes 2 sind jeweils ein lehnenfestes Beschlagoberteil 6 und ein sitzteilfestes, insbesondere bodenfestes Beschlagunterteil 7 vorgesehen.

Das Beschlagunterteil 7 ist dabei über eine bodenseitige, nicht näher dargestellte Sitzteilstruktur am nicht näher dargestellten Fahrzeugboden befestigt.

Ein Beschlag 4 ist auf der betreffenden Außenseite (im Ausführungsbeispiel rechts außen) des Sitzes 2 zwischen dem zugehörigen Beschlagoberteil 6 und dem zugehörigen Beschlagunterteil 7 angeordnet und mit der Sitzlehne 2.1 fest verbunden.

Wie Figur 1 zeigt, weist das Drehlager 3 auf der dem Beschlag 4 gegenüberliegenden Seite des Sitzes 2, im zugehörigen Beschlagunterteil 7, eine Aufnahme 8 zur Aufnahme des Übertragungselements 5 auf. In nicht näher dargestellter Art und Weise ist in der Aufnahme eine Lagerbuchse, beispielsweise aus Kunststoff, angeordnet.

Das im bodenseitigen Beschlagunterteil 7 gelagerte Übertragungselement 5 ragt endseitig außen aus dem Beschlagunterteil 7 hervor. Zur Fixierung des Übertragungselements 5 am Beschlagunterteil 7 ist ein Klemmelement 9 vorgesehen. Das Klemmelement 9 ist in Art einer Klemmscheibe oder Fixierscheibe ausgebildet, welche die drehlagerseitigen Komponenten des Lehnenverstellers 1, das betreffende Ende des Übertragungselements 5 und das betreffende Beschlagunterteil 7 drehlagerseitig miteinander fixiert.

Wie in Figur 2 dargestellt ist, ist das Übertragungselement 5 drehlagerseitig durch das innere Beschlagoberteil 6 geführt und an diesem fixiert. Zur drehlagerseitigen Fixierung des Übertragungselements 5 am Beschlagoberteil 6 ist das Übertragungselement 5 mit dem Beschlagoberteil 6 Stoff-, form- und/oder kraftschlüssig verbunden und somit lehnenfest ausgeführt. Beispielsweise ist das Übertragungselement 5 im Bereich des Drehlagers 3 innenseitig mit dem Beschlagoberteil 6 verschweißt, wie es anhand einer Schweißnaht 10 in Figur 2 gezeigt ist.

Auf der gegenüberliegenden Seite und somit der Beschlagseite ist das Übertragungselement 5 ebenfalls lehnenfest ausgeführt. Beispielsweise ist das beschlagseitige Ende des Übertragungselements 5 am inneren Beschlagoberteil 6 stoff-, form- und/oder kraftschlüssig befestigt. Insbesondere ist das beschlagseitige Ende des Übertragungselements 5 mit dem Beschlagoberteil 6 verschweißt, wie es anhand einer weiteren Schweißnaht 10 in Figur 1 gezeigt ist.

Das Übertragungselement 5 ist somit beidseitig, d.h. drehlagerseitig und beschlagseitig, mit den Beschlagoberteilen 6, insbesondere innenseitig jeweils verschweißt und lehnenfest ausgeführt.

Bei einem Verstellvorgang der Sitzlehne 2.1 dreht sich somit das Übertragungselement 5 beim Entriegeln des Beschlages 4 um die Drehachse D mit der Sitzlehne 2.1 und übernimmt eine Schwenkfunktion, wobei das Übertragungselement 5 auf der Drehlagerseite in der Aufnahme 8 drehbar gelagert ist.

Damit der Beschlag 4 infolge von mechanischen Beanspruchungen nicht überlastet wird, ist das Übertragungselement 5 mittels des Drehlagers 3 über das Beschlagoberteil 6 mit der Sitzlehne 2.1 und über das Beschlagunterteil 7 mit dem Fahrzeugboden und somit dem Unterbau verbunden. Durch die Aufnahme des Drehlagers 3 im bodenseitigen Beschlagunterteil 7 werden auftretende mechanische Beanspruchungen in den Fahrzeugboden abgeleitet.

Für eine vorgespannte Neigungsverstellung der Sitzlehne 2.1 gegenüber dem Sitzteil umfasst der Lehnenversteller 1 darüber hinaus ein Verspannelement 11, dessen beide Enden fixiert oder fest eingespannt sind.

Das Verspannelement 11 ist als eine Drehstabfeder oder Torsionsfeder ausgeführt.

Das Verspannelement 11 ist mit einem Ende drehlagerseitig am zugehörigen Beschlagunterteil 7 außenseitig abgestützt und gelagert, wie in Figur 1 zu sehen ist. Hierzu ist außen am drehlagerseitigen Beschlagunterteil 7 ein Stützlager 12 angeordnet. Das Stützlager 12 ist in Form einer Lasche, Schelle oder Hülse ausgeführt, die beispielsweise aus dem Beschlagunterteil 7 ausgeformt ist oder auf diesem fixiert ist.

Das andere und somit das beschlagseitige Ende des Verspannelements 11 ist im Übertragungselement 5 im Bereich dessen beschlagseitigen Endes formschlüssig gehalten. Hierzu umfasst das Übertragungselement 5 eine nach innen gerichtete Prägung 13, mittels welcher das beschlagseitige Ende des Verspannelements 11 im Übertragungselement 5 fixiert ist.

Das Verspannelement 11 ist einstückig aus einem metallischen Werkstoff, beispielsweise Federstahl, mit einem runden oder nahezu runden Querschnitt gebildet und im Wesentlichen L-förmig ausgeformt. Dabei ist ein erster Schenkel L1 mit einer im Vergleich zu einem zweiten Schenkel L2 vergrößerten Länge ausgeformt.

Wie aus Figur 2 ersichtlich, kann das Ende des zweiten Schenkels L2 zur Aufnahme im Stützlager 12 beispielsweise wellen- oder s-förmig ausgebildet sein. In Figur 1 ist dargestellt, wie der zweite Schenkel L2 mittels eines Stopfens 14, insbesondere Kunststoffstopfens, außen im drehlagerseitigen Ende des Übertragungselements 5 angeordnet und geführt ist.

Der erste Schenkel L1 ist im Wesentlichen in einem Winkel von 90° zum zweiten Schenkel L2, der drehlagerseitig abgestützt ist, abgewinkelt und ragt von außen auf der Drehlagerseite in das hohle Übertragungselement 5 bis zur beschlagseitigen inneren Fixierung an der Prägung 13 des Übertragungselements 5 hinein. Dabei kann das Ende des in das Übertragungselement 5 hineinragenden ersten Schenkels L1 verrundet oder gebogen, insbesondere u-förmig gebogen, sein, um eine Montage und Fixierung des Verspannelements 11 im Übertragungselement 5 zu erleichtern.

Der erste Schenkel L1 des Verspannelements 11 und das insbesondere den ersten Schenkel L1 umhüllende Übertragungselement 5 verlaufen somit in Querrichtung des Sitzes 2 im Bereich der Drehachse D.

Eine solche kompakte drehachsennahe Anordnung der Komponenten, wie des Drehlagers 3, des Beschlags 4, des Übertragungselements 5 und des Verspannelements 11 des Lehnenverstellers 1, ermöglicht einen besonders einfachen und integrierten Aufbau des Lehnenverstellers 1.

Insbesondere die drehachsennahe beidseitige Fixierung des Verspannelements 11 im Bereich des Beschlags 4, im Übertragungselement 5 selbst und im Bereich des Drehlagers 3 außen, im Stützlager 12 und die drehachsennahe Anordnung und Fixierung des Übertragungselements 5 selbst an den Beschlagoberteilen 6, stellen eine besonders kompakte und einfache Ausführungsform für einen Lehnenversteller 1 und einen Sitz 2 mit einem solchen Lehnenversteller 1 dar.

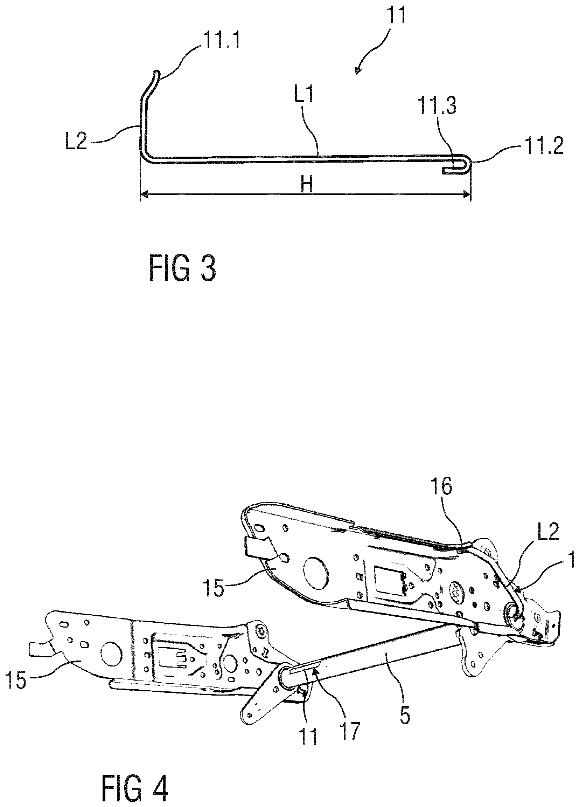

In Figur 4 ist schematisch eine nicht zur Erfindung gehörende perspektivische Darstellung eines Abschnitts der Sitzstruktur mit dem als Torsionsfeder ausgebildeten Verspannelement 11, welches zumindest abschnittsweise im Übertragungselement 5 angeordnet ist, dargestellt. Die Sitzstruktur umfasst zumindest zwei Sitzseitenwangen 15, welche zumindest mittels des Übertragungselements 5 gestellfest miteinander gekoppelt sind. Dabei können beidseitig am Übertragungselement 5 herkömmliche Sitzverstellelemente angeordnet sein. Zwischen den Sitzseitenwangen 15 ist ein nicht dargestelltes Sitzpolster der Sitzfläche gehalten.

Im montierten Fahrzeugsitz ist der erste Schenkel L1 vollständig oder nahezu vollständig im Übertragungselement 5 angeordnet, wobei das Federende der Torsionsfeder mit seinem umgebogenen Abschnitt 11.3 formschlüssig im Übertragungselement 5 gehalten ist. Beispielweise ist am Übertragungselement 5 eine Aussparung 17 angeordnet, welche korrespondierend zum umgebogenen Abschnitt 11.3 des Federendes ausgebildet ist, sodass der umgebogene Abschnitt 11.3 des ersten Schenkels L1 formschlüssig in der Aussparung 17 des Übertragungselementes 5 anordenbar ist. Dabei sind das Übertragungselement 5 und der erste Schenkel L1 des Verspannelements 11 in Querrichtung eines Fahrzeugs angeordnet.

Der Halteabschnitt 11.1 des zweiten Schenkels L2 ist am Halteelement 16 der Sitzseitenwange 15 gehalten. Das Halteelement 16 ist seitlich an der Sitzseitenwange 15 und beispielsweise als zum Halteabschnitt 11.1 des zweiten Schenkels L2 korrespondierende Abkantung an der Sitzseitenwange 15 an- oder ausgeformt.

In Figur 3 ist schematisch ein erfindungsgemäßes Verspannelement 11 dargestellt. Es ist als Torsionsfeder wirksam und einstückig aus einem metallischen Werkstoff, beispielweise Federstahl, mit einem runden oder nahezu runden Querschnitt gebildet und im Wesentlichen L-förmig ausgeformt, wobei der erste Schenkel L1 eine im Vergleich zum zweiten Schenkel L2 vergrößerte Länge aufweist.

Am zweiten Schenkel L2 ist endseitig der Halteabschnitt 11.1 ausgeformt, welcher korrespondierend zu einem in Figur 4 dargestellten Halteelement 16 an einer Sitzstruktur ausgebildet ist. Das Federende des ersten Schenkels L1 ist endseitig u-förmig gebogen und endet im umgebogenen Abschnitt 11.3, so dass ein Bereich des Federendes parallel oder nahezu parallel zum ersten Schenkel L1 verläuft und der erste Schenkel L1 endseitig eine Verrundung 11.2 aufweist. Dadurch wird vorteilhafterweise eine große wirksame Federlänge erreicht. Die Verrundung 11.2 des Federendes der Torsionsfeder ermöglicht eine besonders einfache Montage des ersten Schenkels L1 des Verspannelementes 11 im rohrförmigen Übertragungselement 5. Der Halteabschnitt 11.1 des zweiten Schenkels L2 ist am Halteelement 16 der Sitzseitenwange 15 gehalten. Das Halteelement 16 ist seitlich an der Sitzseitenwange 15 angeordnet und als zum Halteabschnitt 11.1 des zweiten Schenkels L2 korrespondierende Abkantung an der Sitzseitenwange 15 ausgestaltet.

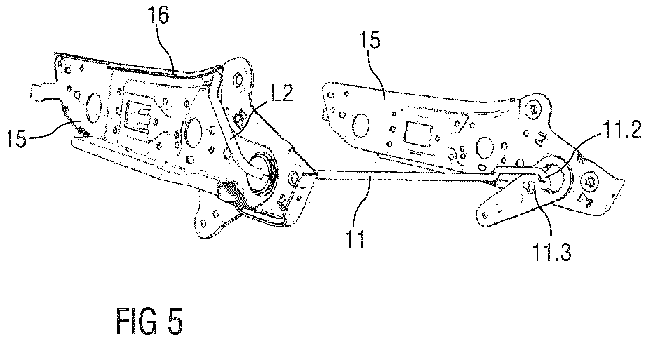

Figur 5 zeigt schematisch eine perspektivische nicht zur Erfindung gehörende Darstellung eines Abschnitts der Sitzstruktur mit einem Verspannelement 11. Dabei ist das rohrförmige Übertragungselement 5 ausgeblendet, um den Verlauf des als Torsionsfeder ausgebildeten Verspannelements 11 innerhalb des Übertragungselementes 5 sichtbar zu machen.

Im montierten Fahrzeugsitz ist der erste Schenkel L1 vollständig oder nahezu vollständig im Übertragungselement 5 angeordnet, wobei das Federende formschlüssig im Überragungselement 5 gehalten ist. Beispielsweise ist im Übertragungselement 5 eine Aussparung angeordnet, welche korrespondierend zur Gestaltung des Federendes ausgebildet ist, so dass das Federende des ersten Schenkels L1 formschlüssig in der Aussparung gehalten wird.

### Bezugszeichenliste

- 1: Lehnenversteller
- 2: Sitz
- 2.1: Sitzlehne
- 3: Drehlager
- 4: Beschlag
- 5: Übertragungselement
- 6: Beschlagoberteil
- 7: Beschlagunterteil
- 8: Aufnahme
- 9: Klemmelement
- 10: Schweißnaht
- 11: Verspannelement
- 11.1: Halteabschnitt
- 11.2: Verrundung
- 11.3: umgebogener Abschnitt
- 12: Stützlager
- 13: Prägung
- 14: Stopfen
- 15: Sitzseitenwange
- 16: Halteelement
- 17: Aussparung

- D: Drehachse
- L1: erster Schenkel des Verspannelements
- L2: zweiter Schenkel des Verspannelements

## Patentansprüche

1. Lehnenversteller (1) für einen Fahrzeugsitz zur Neigungsverstellung einer Sitzlehne (2.1) eines Fahrzeugsitzes (2) mit einem Übertragungselement (5), welches einerseits mit einem Beschlag (4) und andererseits mit einem Drehlager (3) gekoppelt ist, wobei ein Verspannelement (11) vorgesehen ist, welches im Bereich des Drehlagers (3) und im Bereich des gegenüberliegenden Beschlags (4) fixiert ist, wobei
- das Verspannelement (11) im Bereich zwischen dem Drehlager (3) und dem Beschlag (4) zumindest teilweise im Übertragungselement (5) angeordnet ist
- das Übertragungselement (5) als Rohr ausgebildet ist,
- das Drehlager (3) auf einer dem einen Beschlag (4) gegenüberliegenden Seite des Fahrzeugsitzes (2) in einem zugehörigen Beschlagunterteil (7) eine Aufnahme (8) zur Befestigung des Übertragungselements (5) aufweist, in der eine Lagerbuchse angeordnet ist,
- zur Fixierung des Übertragungselements (5) am Beschlagunterteil (7) ein Klemmelement (9) angeordnet ist,
- das Übertragungselement (5) im bodenseitigen Beschlagunterteil (7) gelagert ist und endseitig außen aus dem Beschlagunterteil (7) herausragt,
- das Verspannelement (11) einstückig und im Wesentlichen L-förmig ausgebildet ist, wobei ein erster Schenkel (L1) von außen in das Übertragungselement (5) bis zu einer inneren Fixierung hineinragt und ein zweiter Schenkel (L2) am Drehlager (3) abgestützt ist und
- der erste Schenkel (L1) des Verspannelements (11) endseitig u-förmig gebogen ist und eine Verrundung (11.2) aufweist und
- das Übertragungselement (5) am beschlagseitigen Ende eine nach innen gerichtete Prägung (13) zur formschlüssigen Fixierung des umgebogenen Endes des ersten Schenkels (L1) des Verspannelements (11) aufweist.

2. Lehnenversteller (1) nach Anspruch 1, **dadurch gekennzeichnet, dass** auf den Außenseiten des Lehnenverstellers (1) jeweils ein Beschlagoberteil (6) und ein Beschlagunterteil (7) angeordnet ist, wobei das Beschlagoberteil (6) mit der Sitzlehne (2.1) fest verbindbar ist und das Beschlagunterteil (7) mittels einer bodenseitigen Sitzteilstruktur am Fahrzeugboden befestigbar ist.

3. Lehnenversteller (1) nach einem der vorhergehenden Ansprüche, **dadurch gekennzeichnet, dass** das Verspannelement (11) mit einem Ende drehlagerseitig am zugehörigen Beschlagunterteil (7) außenseitig abgestützt ist.

4. Fahrzeugsitz mit einer Sitzlehne, die mit einem Lehnenversteller (1) in ihrer Neigung um eine Schwenkachse verstellbar ist, **dadurch gekennzeichnet, dass** der Lehnenversteller (1) nach einem der vorhergehenden Ansprüche ausgebildet ist.

## Claims

1. Backrest adjuster (1) for a vehicle seat for adjusting the inclination of a backrest (2.1) of a vehicle seat (2), with a transmission element (5) which is coupled on one side to a fitting (4) and on the other side to a rotary bearing (3), wherein a bracing element (11) is provided which is fixed in the region of the rotary bearing (3) and in the region of the opposite fitting (4), wherein
- the bracing element (11) is at least partially arranged in the transmission element (5) in the region between the rotary bearing (3) and the fitting (4),
- the transmission element (5) is designed as a tube,
- on a side of the vehicle seat (2) opposite the one fitting (4), the rotary bearing (3) has, in an associated fitting lower part (7), a receptacle (8) for fastening the transmission element (5), a bearing bush being arranged in said receptacle (8),
- a clamping element (9) is arranged for the fixing of the transmission element (5) on the fitting lower part (7),
- the transmission element (5) is mounted in the floor-side fitting lower part (7) and projects out of the fitting lower part (7) externally on the end side,
- the bracing element (11) is formed integrally and in a substantially L-shaped manner, wherein a first limb (L1) projects from the outside into the transmission element (5) as far as an inner fixing, and a second limb (L2) is supported on the rotary bearing (3), and
- the first limb (L1) of the bracing element (11) is bent in a U-shaped manner on the end side and has a rounded portion (11.2), and
- the transmission element (5) has, at the fitting-side end, an inwardly directed embossed structure (13) for the form-fitting fixing of the bent-over end of the first limb (L1) of the bracing element (11).

2. Backrest adjuster (1) according to Claim 1, **characterized in that** a fitting upper part (6) and a fitting lower part (7) are arranged respectively on the outer sides of the backrest adjuster (1), wherein the fitting upper part (6) is fixedly connectable to the backrest (2.1) and the fitting lower part (7) is fastenable to the vehicle floor by means of a floor-side seat part structure.

3. Backrest adjuster (1) according to either of the preceding claims, **characterized in that** the bracing element (11) is supported on the outer side of the associated fitting lower part (7) at one end on the rotary-bearing side.

4. Vehicle seat with a backrest which is adjustable in its inclination about a pivot axis with a backrest adjuster (1), **characterized in that** the backrest adjuster (1) is designed according to one of the preceding claims.

## Revendications

1. Dispositif de réglage de dossier (1) pour un siège de véhicule, destiné à régler l'inclinaison d'un dossier (2.1) d'un siège de véhicule (2), comprenant un élément de transmission (5) qui est d'une part accouplé à une ferrure (4) et d'autre part à un palier de pivotement (3), un élément de serrage (11) étant prévu qui est fixé au niveau du palier de pivotement (3) et au niveau de la ferrure opposée (4), dans lequel
- dans la zone entre le palier de pivotement (3) et la ferrure (4), l'élément de serrage (11) est disposé au moins en partie dans l'élément de transmission (5),
- l'élément de transmission (5) est réalisé sous forme de tube,
- le palier de pivotement (3) présente sur un côté, opposé à ladite une ferrure (4), du siège de véhicule (2) dans une partie inférieure de ferrure (7) associée un logement (8) pour fixer l'élément de transmission (5) dans lequel est disposé un coussinet,
- un élément de calage (9) est disposé pour fixer l'élément de transmission (5) à la partie inférieure de ferrure (7),
- l'élément de transmission (5) est logé dans la partie inférieure de ferrure (7) côté plancher et dépasse côté extrémité de la partie inférieure de ferrure (7),
- l'élément de serrage (11) est réalisé d'un seul tenant et est réalisé substantiellement en forme de L, une première branche (L1) faisant saillie de l'extérieur dans l'élément de transmission (5) jusqu'à une fixation intérieure, et une deuxième branche (L2) prenant appui sur le palier de pivotement (3), et
- la première branche (L1) de l'élément de tension (11) est recourbé en forme de u côté extrémité et présente un arrondi (11.2), et
- l'élément de transmission (5) présente à l'extrémité côté ferrure une empreinte (13) orientée vers l'intérieur pour la fixation par complémentarité de forme de l'extrémité recourbée de la première branche (L1) de l'élément de serrage (11) .

2. Dispositif de réglage de dossier (1) selon la revendication 1, **caractérisé en ce que** sur les faces extérieures du dispositif de réglage de dossier (1), respectivement une partie supérieure de ferrure (6) et une partie inférieure de ferrure (7) sont disposées, la partie supérieure de ferrure (6) pouvant être reliée solidement au dossier (2.1) et la partie supérieure de ferrure (7) pouvant être fixée au plancher de véhicule au moyen d'une structure de partie de siège côté plancher.

3. Dispositif de réglage de dossier (1) selon l'une quelconque des revendications précédentes, **caractérisé en ce que** l'élément de serrage (11) prend appui côté extérieur par une extrémité, côté palier de pivotement, sur la partie inférieure de ferrure (7) associée.

4. Siège de véhicule comprenant un dossier qui est réglable par un dispositif de réglage de dossier (1) au niveau de son inclinaison autour d'un axe de pivotement, **caractérisé en ce que** le dispositif de réglage de dossier (1) est réalisé selon l'une quelconque des revendications précédentes.
